(19) Europäisches Patentamt

European Patent Office

Office européen des brevets

(11) **EP 2 886 601 A1**

(12) **EUROPEAN PATENT APPLICATION**

(43) Date of publication:
**24.06.2015 Bulletin 2015/26**

(51) Int Cl.:
***C08L 67/02*** *(2006.01)*

(21) Application number: **13199125.9**

(22) Date of filing: **20.12.2013**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(71) Applicant: **Invista Technologies S.A R.L.
9000 St. Gallen (CH)**

(72) Inventors:
• **Leuschner, Eva-Maria
  86150 Augsburg (DE)**

• **Wiedemann, Josef
  86441 Zusmarshausen (DE)**
• **Kretschmer, Stephan
  86391 Stadtberggen (DE)**
• **Bayer, Uwe
  86459 Gessertshausen (DE)**

(74) Representative: **Conroy, John et al
Fish & Richardson P.C.
Highlight Business Towers
Mies-van-der-Rohe-Straße 8
80807 München (DE)**

(54) **Improved polyester-ether resin blends**

(57) The application relates to compositions for preparing articles, preforms or containers comprising composition for preparing articles, preforms or containers comprising a base polyester, a copolyester-ether, a transition metal-based oxidation catalyst, and a titanium compound, wherein the weight ratio of the transition metal-based oxidation catalyst to the titanium compound, on basis of the weight of the transition metal and the titanium, is from 50:1 to 1:1.

EP 2 886 601 A1

## Description

FIELD OF THE INVENTION

The present invention relates to novel polyester-ether containing polyester resins. Articles, preforms and containers comprising these resins show improved oxygen barrier properties.

BACKGROUND OF THE INVENTION

Polyesters have been replacing glass and metal packaging materials due to their lighter weight, decreased breakage compared to glass, and potentially lower cost. One major deficiency with standard polyesters, however, is its relatively high gas permeability. This curtails the shelf life of carbonated soft drinks and oxygen sensitive beverages or foodstuffs such as beer, wine, tea, fruit juice, ketchup, cheese and the like. Organic oxygen scavenging materials have been developed partly in response to the food industry's goal of having longer shelf-life for packaged food. These oxygen scavenging materials are incorporated into at least a portion of the package and remove oxygen from the enclosed package volume which surrounds the product or which may leak into the package, thereby inhibiting spoilage and prolonging freshness.

Suitable oxygen scavenging materials include oxidizable organic polymers which may react with ingressing oxygen. One example of an oxidizable organic polymer is a polyether. The polyether is typically used as a polyester-ether copolymer and in low amounts of less than 10 weight percent of the packaging material. The polyester-ether is dispersed in the matrix polyester phase and interacts with a suitable oxygen scavenging catalyst that catalyzes the reaction of the ingressing oxygen with the polyether. Oxygen scavenging catalysts are typically transition metal compounds, for example an organic or inorganic salt of cobalt. Other examples include manganese, copper, chromium, zinc, iron and nickel.

Polyester containers comprising polyester-ethers and an oxygen scavenging catalyst show excellent oxygen barrier properties. However, the transition metal based oxygen scavenging catalyst may impart color to the resin and may catalyze unwanted degradation processes in the resin. Therefore, it is often desirable to minimize the amount of metal based oxygen scavenging catalysts.

SUMMARY OF THE INVENTION

It was now found that the introduction of a titanium compound into the polymer resin improves oxygen barrier properties if the resin further comprises a traditional transition metal-based oxidation catalyst such as a cobalt compound. This is highly surprising since the very same titanium compound provides only poor oxygen barrier properties on its own. Without wishing to be limited by theory, it appears that the titanium compound acts as a co-catalyst in combination with the transition metal-based oxidation catalyst and that both compounds work together in a complementary manner to surprisingly improve oxygen barrier properties of the resin. Furthermore, already a very small amount of the titanium compound provides a very substantial increase in oxygen barrier properties. Thus, the overall amount of transition metals in the resin can be reduced. Most advantageously, it is possible to use the titanium compound as transesterfication or polycondensation catalyst. If the titanium compound has such a dual purpose, the overall amount of transition metals in the resin can even be further reduced.

Accordingly, in one aspect, there is provided a composition for preparing articles, preforms or containers comprising:

a) 80-99.5 parts by weight of a base polyester;
b) 0.5-20 parts by weight of a copolyester-ether, wherein the copolyester-ether comprises one or more polyester segments and one or more polyether segments; and
c) a transition metal-based oxidation catalyst,

c1) wherein the transition metal is selected from cobalt, manganese, copper, chromium, zinc, iron, and nickel, and
c2) wherein the transition metal based oxidation catalyst is present in an amount of 10 - 500 ppm, on basis of the weight of the transition metal in the total composition; and

d) a titanium compound,

wherein the weight ratio of the transition metal-based oxidation catalyst to the titanium compound, on basis of the weight of the transition metal and the titanium, is from 50:1 to 1:1.

In another aspect, there is provided a "salt-and-pepper" mixture of masterbatches, more specifically a kit-of-parts for use in preparing articles, preforms or containers comprising two masterbatches which may optionally be in admixture:

a first masterbatch comprising:

a) a base polyester,
b) a transition metal-based oxidation catalyst, wherein the transition metal is selected from cobalt, manganese, copper, chromium, zinc, iron, and nickel, and
c) a titanium compound, wherein the titanium compound is present in an amount of about 5 to about 500 ppm, on basis of the weight of the titanium in the first masterbatch; and

a second masterbatch comprising:

d) a copolyester-ether; and optionally
e) one or more antioxidants.

In another aspect, there are provided an article, preform or container prepared from a composition or kit-of-parts of the above aspects.

In another aspect, there is provided a method of preparing a composition for use in preparing articles, preforms or containers comprising mixing:

a) 80-99.5 parts by weight of a base polyester;
b) 0.5-20 parts by weight of a copolyester-ether, wherein the copolyester-ether comprises one or more polyester segments and polyether segments; and
c) a transition metal-based oxidation catalyst,

c1) wherein the transition metal is selected from cobalt, manganese, copper, chromium, zinc, iron, and nickel, and
c2) wherein the transition metal based oxidation catalyst is present in an amount of 10 - 500 ppm, on basis of the weight of the transition metal in the total composition; and

d) a titanium compound;

wherein the weight ratio of the transition metal-based oxidation catalyst to the titanium compound, on basis of the weight of the transition metal and the titanium, is from 50:1 to 1:1.

In still another aspect, there is provided a method of preparing a kit-of-parts for use in preparing articles, preforms or containers comprising combining two masterbatches,
the first masterbatch comprising:

a) a base polyester,
b) a transition metal-based oxidation catalyst, wherein the transition metal is selected from cobalt, manganese, copper, chromium, zinc, iron, and nickel, and
c) a titanium compound, wherein the titanium compound is present in an amount of about 5 to about 500 ppm, on basis of the weight of the titanium in the first masterbatch; and

the second masterbatch comprising:

d) a copolyester-ether; and optionally
e) one or more antioxidants.

DETAILED DESCRIPTION OF THE INVENTION

The following detailed description of components is applicable to all of the above-mentioned aspects of the present invention. In addition, individual elements of the detailed description are intended to be freely combinable with the above various aspects of the invention.

Generally, polyesters suitable for the present invention can be prepared by one of two processes, namely: (1) the ester process and (2) the acid process. The ester process is where a dicarboxylic ester (such as dimethyl terephthalate) is reacted with ethylene glycol or other diol in an ester interchange reaction. Catalysts for use in the ester interchange reaction are well known and may be selected from manganese, zinc, cobalt, titanium, calcium, magnesium or lithium compounds. Because the reaction is reversible, it is generally necessary to remove the alcohol (e.g. methanol when dimethyl terephthalate is employed) to completely convert the raw materials into monomers. The catalytic activity of the interchange reaction catalyst may optionally be sequestered by introducing a phosphorus compound, for example polyphosphoric acid, at the end of the ester interchange reaction. Then the monomer undergoes polycondensation. The catalyst employed in this reaction is typically an antimony, germanium, aluminum, zinc, tin or titanium compound, or a mixture of these. In some embodiments, it may be advantageous to use a titanium compound. In the second method for making polyester, an acid (such as terephthalic acid) is reacted with a diol (such as ethylene glycol) by a direct esterification reaction producing monomer and water. This reaction is also reversible like the ester process and thus to drive the reaction to completion one must remove the water. The direct esterification step does not require a catalyst. The monomer then undergoes polycondensation to form polyester just as in the ester process, and the catalyst and conditions employed are generally the same as those for the ester process. In summary, in the ester process there are two steps, namely: (1) an ester interchange, and (2) polycondensation. In the acid process there are also two steps, namely: (1) direct esterification, and (2) polycondensation.

Suitable polyesters can be aromatic or aliphatic polyesters, and are preferably selected from aromatic polyesters. An aromatic polyester is preferably derived from one or more diol(s) and one or more aromatic dicarboxylic acid(s). The aromatic dicarboxylic acid includes, for example, terephthalic acid, isophthalic acid, 1,4-, 2,5-, 2,6- or 2,7-naphthalenedicarboxylic acid and 4,4'-diphenyldicarboxylic acid (and of these terephthalic acid is preferred). The diol is preferably selected from aliphatic and cycloaliphatic diol(s), including, for example, ethylene glycol, 1,4-butanediol, 1,4-cyclohexane dimethanol, and 1,6-hexanediol (and of these, aliphatic diols, and preferably ethylene glycol, is preferred). Preferred polyesters are polyethylene terephthalate (PET) and polyethylene-2,6-naphthalene dicarboxylate (also referred to herein as polyethylene-2,6-naphthalate), and particularly preferred is PET.

Examples of suitable polyesters include those produced from the reaction of a diacid or diester component comprising at least 65 mol.-% aromatic diacid (preferably terephthalic acid) or the $C_1$-$C_4$ dialkyl ester of the aromatic acid (preferably $C_1$-$C_4$ dialkylterephthalate), for example at least 70 mol.-% or at least 75 mol.-% or at least 95 mol.-%, with a diol component comprising at least 65 mol.-% diol (preferably ethylene glycol), for example at least 70 mol.-% or at least 75 mol- % or at least 95 mol.-%. Exemplary polyesters include those wherein the diacid component is terephthalic acid and the diol component is ethylene glycol, thereby forming polyethylene terephthalate (PET). The mole percent for all the diacid components totals 100 mol.-%, and the mole percentage for all the diol components totals 100 mol.-%.

The polyester may be modified by one or more diol components other than ethylene glycol. In this case, the polyester is a copolyester. Suitable diol components of the described polyester may be selected from 1,4-cyclohexane-dimethanol, 1,2-propanediol, 1,4-butanediol, 2,2-dimethyl-1,3-propanediol, 2-methyl-1,3-propanediol (2MPDO) 1,6-hexanediol, 1,2-cyclo-hexanediol, 1,4-cyclohexanediol, 1,2-cyclohexanedimethanol, 1,3-cyclohexanedimethanol, and diols containing one or more oxygen atoms in the chain, e.g., diethylene glycol, triethylene glycol, dipropylene glycol, tripropylene glycol or mixtures of these, and the like. In general, these diols contain 2 to 18, preferably 2 to 8 carbon atoms. Cycloaliphatic diols can be employed in their cis- or trans-configuration or as mixture of both forms. Suitable modifying diol components can be 1,4-cyclohexanedimethanol or diethylene glycol, or a mixture of these.

The polyester may be modified by one or more acid components other than terephthalic acid. In this case, the polyester is a copolyester. Suitable acid components (aliphatic, alicyclic, or aromatic dicarboxylic acids) of the linear polyester may be selected, for example, from isophthalic acid, 1,4-cyclohexanedicarboxylic acid, 1,3-cyclohexanedicarboxylic acid, succinic acid, glutaric acid, adipic acid, sebacic acid, 1,12-dodecanedioic acid, 2,6-naphthalenedicarboxylic acid, bibenzoic acid, or mixtures of these and the like. In the polymer preparation, it is possible to use a functional acid derivative of the above acid components. Typical functional acid derivatives include the dimethyl, diethyl, or dipropyl ester of the dicarboxylic acid or its anhydride.

Advantageously, the polyester is a copolyester of ethylene glycol with a combination of terephthalic acid and isophthalic acid and/or 5-sulfoisophthalic acid. Generally, the isophthalic acid can be present from about 0.05 mol.-% to about 10 mol.-% and the 5-sulfoisophthalic acid from can be present from about 0.1 mol.-% to about 3 mol.-% of the copolymer.

Advantageously, the polyester is selected from polyethylene terephthalate, polyethylene naphthalate, polyethylene isophthalate, copolymers of polyethylene terephthalate, copolymers of polyethylene naphthalate, copolymers of polyethylene isophthalate, or mixtures thereof; for example the polyester can be a copolymer of polyethylene terephthalate, such as poly(ethylene terephthalate-co-ethylene isophthalate) or poly(ethylene terephthalate-co-ethylene 5-sulfoisophthalate).

The composition for preparing an article, preform or container comprises 80-99.5 parts by weight of a base polyester, including 85-99.5, 90-99.5, or 95-99.5 parts by weight of the base polyester. Preferably, the composition comprises 90-99.5 parts by weight of the base polyester.

Generally, copolyester-ethers suitable for the present invention comprise one or more polyester segments and one or more polyether segments. The polyether segments advantageously have a number-average molecular weight of from about 200 to about 5000 g/mol. Advantageously, the polyether segments of the copolyester-ether has a number-average molecular weight of from about about 600 to about 2500 g/mol, more specifically between about 800 to about 1800 g/mol or between about 1000 to about 1600 g/mol.

The one or more polyether segments may be present in an amount of about 5 to about 95 wt.-% of the copolyester-ether. Advantageously, the polyether segments are present in an amount of about 5 to about 45 wt.-%, more specifically about 10 to about 40 wt.-%, or in particular about 25 to about 35 wt.-% or about 25 to about 30 wt.-%, in all cases based on the copolyester-ether.

Generally, copolyester-ethers suitable for the present invention comprise one or more polyether segments in amounts so that the weight ratio of the one or more polyether segments to the total amount of base polyester and polyester segments in the composition is about 0.2 to about 10 wt.-%, more specifically about 0.5 to about 10 wt.-%, or in particular about 0.7 to about 5 wt.-%, or 0.5 to 1.5 wt.-%, or about 1 to about 2.5 wt.-%.

Advantageously, the polyether segment is a poly ($C_2$-$C_6$-alkylene glycol) segment. The $C_2$-$C_6$-alkylene glycol may be a linear or branched aliphatic $C_2$-$C_6$-moiety. Specific examples of such copolyester-ethers include poly(ethylene glycol), linear or branched poly(propylene glycol), linear or branched poly(butylene glycol), linear or branched poly(pentylene glycol), linear or branched poly(hexylene glycol) as well as mixed poly ($C_2$-$C_6$-alkylene glycols) obtained from two or more of the glycolic monomers used in preparing the before-mentioned examples. Advantageously, the polyether segment is a linear or branched poly(propylene glycol) or a linear or branched poly(butylene glycol).

The copolyester-ethers suitable for the present invention also comprise one or more polyester segments. The type of polyester in these segments is not particularly limited and can be any of the above-referenced polyesters. Advantageously, the copolyester-ether comprises a polyethylene terephthalate (co)polymer segment. Advantageously, the copolyester-ether comprises a polyethylene terephthalate (co)polymer segment and a linear or branched poly(butylene glycol) segment.

The composition for preparing an article, preform or container comprises 0.5-20 parts by weight of a copolyester-ether, including 0.5-15, 0.5-10, or 0.5-5 parts by weight of the copolyester-ether. Preferably, the composition comprises 1-5 parts by weight of the copolyester-ether.

Methods of preparing polyethers and copolyester-ethers are well known in the art. For example, the copolyester-ether can be produced by ester interchange with the dialkyl ester of a dicarboxylic acid. In the ester interchange process dialkyl esters of dicarboxylic acids undergo transesterification with one or more glycols in the presence of a catalyst such as zinc acetate as described in WO 2010/096459 A2, incorporated herein by reference. A suitable amount of elemental zinc in the copolyester-ether can be about 35 to about 100 ppm, for example about 40 to about 80 ppm, by weight of the copolyester-ether. The poly(alkylene oxide) glycols replace part of these glycols in these transesterification processes. The poly(alkylene oxide) glycols can be added with the starting raw materials or added after transesterification. In either case, the monomer and oligomer mixture can be produced continuously in a series of one or more reactors operating at elevated temperature and pressures at one atmosphere or lesser. Alternatively, the monomer and oligomer mixture can be produced in one or more batch reactors. Suitable conditions for these reactions are temperatures of from about 180°C to 250°C and pressures of from about 1 bar to 4 bar.

Next, the mixture of copolyester-ether monomer and oligomers undergoes melt-phase polycondensation to produce a polymer. The polymer is produced in a series of one or more reactors operating at elevated temperatures. To facilitate removal of excess glycols, water, and other reaction products, the polycondensation reactors are run under a vacuum. Catalysts for the polycondensation reaction include compounds of antimony, germanium, tin, titanium and/or aluminum. In some embodiments, it may be advantageous to use a titanium compound. A suitable amount of elemental Ti can be about 5 to about 60 ppm, for example about 10 to 35 ppm. Reaction conditions for polycondensation can include (i) a temperature less than about 290°C, or about 10°C higher than the melting point of the copolyester-ether; and (ii) a pressure of less than about 0.01 bar, decreasing as polymerization proceeds. This copolyester-ether can be produced continuously in a series of one or more reactors operating at elevated temperature and pressures less than one atmosphere. Alternatively this copolyester-ether can be produced in one or more batch reactors. The intrinsic viscosity after melt phase polymerization can be in the range of about 0.5 dl/g to about 1.5 dl/g. Antioxidants and other additives can be added before and/or during polymerization to control the degradation of the polyester-ether segments. Alternatively, the copolyester-ethers can be produced by reactive extrusion of the polyether with the polyester. In the above-described methods of preparing the copolyester-ethers, it may happen that the polyether does not fully react with the polyester but is partly present as an intimate blend of the polyester and polyether. Therefore, throughout the specification and claims, the reference to a copolyester-ether comprising one or more polyester segments and one or more polyether segments is to be understood as referring to the respective copolyester-ethers, blends of respective polyesters and polyethers, and mixtures comprising both the respective copolyester-ethers and blends of the respective polyesters and polyethers.

The copolyester-ether is preferably used in amounts of about 0.5 to about 20 wt.-% in relation to the final composition. Advantageously, the amount of the copolyester-ether is selected within the range of about 0.5 to about 20 wt.-%, in relation to the final container, preform or article composition, so that the amount of polyether segments to the total amount of base polyester and polyester segments in the composition is about 0.2 to about 10 wt.-%, more specifically about 0.5 to about 10 wt.-%, or in particular about 0.7 to about 5 wt.-%, or about 0.5 to about 1.5 wt.-% or about 1 to about 2.5 wt.-%.

It is particularly advantageous that the copolyester-ether contains one or more polyether segments in an amount of about 5 to about 45 wt.-%, in particular about 15 to about 35 wt.-%, more specifically about 20 to about 30 wt.-%, and that the amount of the copolyester-ether is selected so that the amount of polyether segments to the total amount of base polyester and polyester segments in the composition is about 0.5 to about 10 wt.-% , in particular about 0.7 to about 5 wt.-%, or about 0.5 to about 1.5 wt.-%, or about 1 to about 2.5 wt.%.

It is particularly advantageous that the polyether segments in the copolyester-ether have a number-average molecular weight of from about 600 to about 2500 g/mol, in particular about 800 to about 1600 g/mol, that the copolyester-ether contains one or more polyether segments in an amount of about 15 to about 35 wt.-%, in particular about 20 to about 30 wt.-%, and that the amount of the copolyester-ether is selected within the range of about 0.5 to about 20 wt.-%, in relation to the final composition, so that the amount of polyether segments to the total amount of base polyester and polyester segments in the composition is about 0.5 to about 10 wt.-% , in particular about 0.7 to about 5 wt.-%, or about 0.5 to about 1.5 wt.-%, or about 1 to about 2.5 wt.-% .

It is particularly advantageous that the polyether segments in the copolyester-ether are selected from a linear or branched poly(propylene glycol) or a linear or branched poly(butylene glycol) having a number-average molecular weight of from about 600 to about 2500 g/mol, in particular about 800 to about 1600 g/mol, that the copolyester-ether contains one or more polyether segments in an amount of about 15 to about 35 wt.-%, in particular about 20 to about 30 wt.-%, and that the amount of the copolyester-ether is selected within the range of about 0.5 to about 20 wt.-%, in relation to the final composition, so that the amount of polyether segments to the total amount of base polyester and polyester segments in the composition is about 0.5 to about 10 wt.-% , in particular about 0.7 to about 5 wt.-%, or about 0.5 to about 1.5 wt.-%, or about 1 to about 2.5 wt.-%.

Advantageously, the copolyester-ether and/or the polyester is produced using a titanium-based polycondensation and/or transesterfication catalyst. In particular, it may be advantageous that the polyester is produced using a titanium-based polycondensation catalyst.

The compositions, kit-of-parts and processes of the invention further utilize a transition metal-based oxidation catalyst selected from a cobalt, manganese, copper, chromium, zinc, iron, or nickel compound. The transition metal-based oxidation catalyst may be present in the form of a metal salt. In this case, suitable counter ions for the transition metal include, but are not limited to, carboxylates, such as neodecanoates, octanoates, stearates, acetates, naphthalates, lactates, maleates, acetylacetonates, linoleates, oleates, palminates or 2-ethyl hexanoates, oxides, carbonates, chlorides, dioxides, hydroxides, nitrates, phosphates, sulfates, silicates or mixtures thereof. It is particularly advantageous to utilize a cobalt-based oxidation catalyst. Examples include cobalt carboxylates and sulfonates.

In some embodiments, the weight ratio of the transition metal-based oxidation catalyst to the titanium compound, on the basis of the weight of the transition metal and the titanium, is from 50:1 to 1:1. Optionally, the ratio is from 25:1 to 1:1, 10:1 to 1:1, 5:1 to 1:1 or 2:1 to 1:1.

Advantageously, the titanium compound is present in an amount of about 5 to about 20 ppm, more specifically about 5 to about 15 ppm, and in particular about 5 to about 10 ppm, on basis of the weight of titanium in the total composition, and that the transition metal based oxidation catalyst is present in an amount of 30 to 200 ppm, more specifically about 50 to about 150 ppm, and in particular about 75 to about 125 ppm, on basis of the weight of the transition metal in the total composition.

It may be particularly advantageous that titanium compound is a polycondensation and/or transesterfication catalyst.

Advantageously, the polyether segments in the copolyester-ether have a number-average molecular weight of from about 600 to about 2500 g/mol, in particular about 800 to about 1600 g/mol, that the polyether segment is a linear or branched poly ($C_2$-$C_6$-alkylene glycol) segment, that the transition metal-based oxidation catalyst is a cobalt compound, that the titanium compound is present in an amount of about 5 to about 20 ppm, on basis of the weight of the titanium in the total composition, and that the transition metal based oxidation catalyst is present in an amount of about 30 to about 200 ppm, on basis of the weight of the transition metal in the total composition.

Advantageously, the polyether segments in the copolyester-ether have a number-average molecular weight of from about 600 to about 2500 g/mol, in particular about 800 to about 1600 g/mol, that the polyether segment is a linear or branched poly ($C_2$-$C_6$-alkylene glycol) segment, that the transition metal-based oxidation catalyst is a cobalt compound, that the titanium compound is a polycondensation and/or transesterfication catalyst, that the titanium compound is present in an amount of about 5 to about 20 ppm, in particular about 7 to about 15 ppm, on basis of the weight of titanium in the total composition, and that the transition metal based oxidation catalyst is present in an amount of about 30 to about 200 ppm, in particular 50 to about 150 ppm, on basis of the weight of the transition metal in the total composition.

In the kit-of-parts embodiments of the present invention, it may be advantageous that the kit-of-parts is packaged for storage. In the kit-of-parts embodiments of the present invention, it may be advantageous that the polyester is a polyethylene terephthalate (co)polyester. In the kit-of-parts embodiments of the present invention, it may be advantageous that the copolyester-ether comprises one or more polyether segments having a number-average molecular weight of from about 200 to about 5000 g/mol and is a linear or branched poly ($C_2$-$C_6$-alkylene glycol) segment.

In the kit-of-parts embodiments of the present invention, it may be advantageous that in the first masterbatch the transition metal based oxidation catalyst is present in an amount of about 500 to about 15000 ppm, in particular about 750 to about 10000 ppm, or about 1000 to about 5000 ppm, on basis of the weight of the transition metal in first masterbatch. In the kit-of-parts embodiments of the present invention, it may be advantageous that the weight ratio of the transition metal-based oxidation catalyst to the titanium compound present in the first masterbatch, on basis of the weight of the transition metal and the titanium, is from about 5:1 to about 500:1, more specifically about 7:1 to about 400:1, in particular about 10:1 to about 250:1 or about 20:1 to about 150:1.

In the kit-of-parts embodiments of the present invention, it may be particularly advantageous that transition metal-based oxidation catalyst is a cobalt compound that is present in an amount of about 500 to about 15000 ppm, in particular about 750 to about 10000 ppm, more specifically about 1000 to about 5000 ppm, on basis of the weight of cobalt in the first masterbatch and that the titanium compound is present in an amount of about 5 to about 500 ppm, in particular about 7 to about 300 ppm, more specifically about 10 to about 200 ppm, even more specifically about 20 to about 150 ppm, or about 50 to about 100 ppm, on basis of the weight of the titanium in the first masterbatch.

In the kit-of-parts embodiments of the present invention, it may be advantageous that the second masterbatch comprises a titanium compound, e.g. in the form of a polycondensation and/or transesterfication catalyst. In some embodiments, this may reduce unwanted side-products.

Embodiments in some aspects of the invention may further comprise an antioxidant, in particular one selected from the group consisting of hindered amine light stabilizers (HALS), hindered phenols, benzophenones, sulfur-based antioxidants, and phosphites. Examples of such antioxidants include, but are not limited to 1,3,5-trimethyl-2,4,6-tris(3,5-di-tert-butyl-4-hydroxybenzyl)-benzene (CAS: 1709-70-2), tetrakis(2,4-di-tert-butylphenyl)-1,1-biphenyl-4,4'-diylbisphosphonite (CAS: 38613-77-3) or pentaerythritol tetrakis(3-(3,5-di-tert-butyl-4-hydroxyphenyl)propionate (CAS: 6683-19-8). Advantageously, one or more antioxidants are used in a total amount of about 100 ppm to about 10,000 ppm, more specifically about 200 ppm to about 5,000 ppm or about 300 ppm to about 3,000 ppm, and in particular about 500 ppm to about 2,500 ppm, on basis of the total weight of the antioxidant to the total weight of the composition.

Embodiments in some aspects of the invention may further comprise additives selected from the group consisting of dyes, pigments, fillers, branching agents, reheat agents, anti-blocking agents, anti-static agents, biocides, blowing agents, coupling agents, flame retardants, heat stabilizers, impact modifiers, crystallization aids, lubricants, plasticizers, processing aids, buffers, and slip agents. Representative examples of such additives are well-known to the skilled person.

It may be advantageous that an ionic compatibilizer is present or used. Suitable ionic compatibilizers can for instance be copolyesters prepared by using ionic monomer units as disclosed in WO 2011/031929 A2, page 5, incorporated herein by reference.

The disclosed compositions, kit-of-parts and methods may be used for preparing various articles of manufacture. Suitable articles include, but are not limited to, film, sheet, tubing, pipes, fiber, container preforms, blow molded articles such as rigid containers, thermoformed articles, flexible bags and the like and combinations thereof. Typical rigid or semi-rigid articles can be formed from plastic, paper or cardboard cartons or bottles such as juice, milk, soft drink, beer and soup containers, thermoformed trays or cups. In addition, the walls of such articles may comprise multiple layers of materials.

The invention is further illustrated by the following examples, although it will be understood that these examples are included for the purposes of illustration only and are not intended to limit the scope of the invention.

The term "comprising" encompasses "including" as well as "consisting" e.g. a composition "comprising" X may consist exclusively of X or may include something additional e.g. X + Y.

TEST PROCEDURES

Number Average Molecular Weight

The number average molecular weight of the polyols is determined by the titration method for the hydroxyl number of the polyols. Similar ASTM methods are ASTM E222A and ASTM E222B, herein incorporated by reference.

For that 1 h of polyglycol, whereas the actual weight is dependent on the expected hydroxyl number - (expected to be 50/hydroxyl number), was added into a 100 mL beaker 15 mL of dry tedrahydrofuran and the sample dissolved using a magnetic stirrer. 10 mL of p-toluenesulfonyl isocyanate in 250 mL anhydrous acetonitrile was then added to the solution. The solution was then stirred for five minutes after 1 mL of water was added.

Then the solution was diluted to 60 mL with tetrahydrofuran and titrated with 0.1 N tetrabutyl ammonium hydroxide (TBAOH) using an automatic titrator.
(TBAOH titrant: 100 mL 1M TBAOH/MeOH in 1000 mL Isopropanol. Standardize against potassium biphthalate or benzoic acid standards. Restandardize every time the electrode is recalibrated.)

The hydroxyl number of the polyol was calculated as followed:

$$Hydroxyl\ number\ (OH\#) = \frac{(V2 - V1) \cdot N \cdot 56.1}{sample\ weight}$$

whereas

V1 = Titrant volume at first equivalence point (low pH)
V2 = Titrant volume at second equivalence point (higher oH)
N = Normality of TBAOH

The number molecular weight of the polyol is then calculated as followed:

$$Molecular\ weight\ (number\ average) = \frac{112200}{Hydroxyl\ number\ (OH\#)}\ [\frac{g}{mol}]$$

Intrinsic Viscosity

The determination of the intrinsic viscosity was determined on a 0.01 g/mL polymer solution in dichloroacetic acid.
Before dissolution of solid state polymerized material, the chips were pressed in a hydraulic press (pressure: 400 kN at 115°C for about 1 minute; type: PW40® Weber, Remshalden-Grunbach, Germany). 480 to 500 mg polymer, either amorphous chips or pressed chips, were weighed on an analytical balance (Mettler AT 400®) and dichloroacetic acid is added (via Dosimat® 665 or 776 from Metrohm) in such an amount, that a final polymer concentration of 0.0100 g/mL is reached.
The polymer is dissolved under agitation (magnetic stirring bar, thermostat with set point of 65°C; Variomag Thermomodul 40ST®) at 55°C (internal temperature) for 2.0 hrs. After complete dissolution of the polymer, the solution is cooled down in an aluminum block for 10 to 15 minutes to 20°C (thermostat with set point of 15°C; Variomag Thermomodul 40ST®).
The viscosity measurement was performed with the micro Ubbelohode viscometer from Schott (type 53820/II; ⌀: 0.70 mm) in the Schott AVS 500® apparatus. The bath temperature is held at 25.00 ± 0.05°C (Schott Thermostat CK 101®). First the micro Ubbelohde viscometer is purged 4 times with pure dichloroacetic acid then the pure dichloroacetic acid is equilibrated for 2 minutes. The flow time of the pure solvent is measured 3 times. The solvent is drawn off and the viscometer is purged with the polymer solution 4 times. Before measurement, the polymer solution is equilibrated for 2 minutes and then the flow time of this solution is measured 3 times.
The relative viscosity (RV) is determined by dividing the flow time of the solution by the flow time of the pure solvent. RV is converted to IV using the equation: IV (dl/g) = [(RV-1) x 0.691] + 0.063.

Elemental metal content

The elemental metal content of the ground polymer samples was measured with an Atom Scan 16 ICP Emission Spectrograph from Spektro. 250 mg of the copolyester-ether was dissolved via microwave extraction by adding 2.5 mL sulfuric acid (95-97%) and 1.5 mL nitric acid (65%). The solution was cooled, then 1 mL hydrogen peroxide was added to complete the reaction and the solution was transferred into a 25 mL flask using distilled water. The supernatant liquid was analyzed. Comparison of the atomic emissions from the samples under analysis with those of solutions of known elemental ion concentrations was used to calculate the experimental values of elements retained in the polymer samples.

Oxygen ingress measurements - Non-Invasive Oxygen Determination (NIOD)

There are several methods available to determine the oxygen permeation, or transmission, into sealed packages such as bottles. In this case, non-invasive oxygen measurement systems (e.g., supplied by OxySense® and PreSens Precision Sensing) based on a fluorescence quenching method for sealed packages were employed. They consist of an optical system with an oxygen sensor spot (e.g. OxyDot®, which is a metal organic fluorescent dye immobilized in a gas permeable hydrophobic polymer) and a fiber optic reader-pen assembly which contains both a blue LED and photo-detector to measure the fluorescence lifetime characteristics of the oxygen sensor spot (e.g. OxyDot®).

The oxygen measurement technique is based upon the absorption of light in the blue region of the metal organic fluorescent dye of the oxygen sensor spot (e.g., OxyDot®), and fluorescence within the red region of the spectrum. The presence of oxygen quenches the fluorescent light from the dye as well as reducing its lifetime. These changes in the fluorescence emission intensity and lifetime are related to the oxygen partial pressure, and thus they can be calibrated to determine the corresponding oxygen concentration.

The oxygen level within a package such as a bottle can be measured by attaching an oxygen sensor spot (e.g., OxyDot®) inside the package. The oxygen sensor spot is then illuminated with a pulsed blue light from the LED of the fiber optic reader-pen assembly. The incident blue light is first absorbed by the dot and then a red fluorescence light is emitted. The red light is detected by a photo-detector and the characteristic of the fluorescence lifetime is measured. Different lifetime characteristics indicate different levels of oxygen within the package.

Experimental method with PET bottle at ambient conditions (23°C)

A PreSens non-invasive and non-destructive oxygen ingress measurement equipment (Fibox 3-trace meter, fiber optic cable and trace oxygen sensor spots) was used to determine the oxygen permeability of the bottle at room temperature (23°C). For a typical shelf-life test, the trace oxygen sensor spot was first attached onto the inner side wall of a 500 ml transparent PET bottle. The bottle was then filled with deionized and deoxygenated water containing $AgNO_3$ up to a headspace of approx. 20 ml, inside a nitrogen circulation glove box where the oxygen level of the water inside the bottle was stabilized at a level well below 50 ppb. These bottles were then stored in a conditioning cabinet (Binder 23°C, 50% relative humidity) and the oxygen ingresses were monitored as a function of time using the PreSens oxygen ingress measurement equipment.

At a given time of measurements, an average value was first obtained from about 10 readings taken on the output of the trace oxygen spot for each bottle. This was then repeated for all the 5 bottles so as to achieve an overall averaged value for the oxygen ingress through the formulated cap and the wall of the bottle.

Oxygen measurements were made on day 0, 1, 2, 3, 8, 14, 21, 28, 42 and 56, and the average oxygen ingress was determined and reported as ppb.

Preform and bottle process

Unless otherwise stated, the barrier copolyester-ether of the present invention was dried for about 24 hours at 110 - 120°C under nitrogen atmosphere, blended with the dry base resin, melted and extruded into preforms. Each preform for a 0.5 liter soft drink bottle, for example, employed about 28 grams of the resin. The preform was then heated to about 85 - 120°C and stretch-blown into a 0.5 liter contour bottle at a planar stretch ratio of approx. 8. The stretch ratio is the stretch in the radial direction times the stretch in the length (axial) direction. Thus if a preform is blown into a bottle, it may be stretched about two times in the axial direction and stretched up to about four times in the hoop direction giving a planar stretch ratio of up to eight (2x4). Since the bottle size is fixed, different preform sizes can be used for obtaining different stretch ratios. The sidewall thickness of the bottles was > 0.25 mm.

EXAMPLES

Example 1 - General synthesis of the base polyesters

E1a - Synthesis of the base polyester

The base resins were either received from Invista Resin&Fibers GmbH or prepared using continuous process: A slurry of terephthalic acid (PTA), isophthalic acid (3.05 wt.-% based on the final polymer) and glycol in a small molar excess of glycol (EG) (PTA/EG molar ratio < 1:1.08) were continuously charged to the primary esterification reactor. The amount of slurry added to the primary esterification reactor was controlled by a flow measuring device. In the primary esterification reactor, terephthalic acid and glycol react at 250-260°C and 2-4 bar excess pressure under water release. The resulting low molecular weight esterification product was then transferred (via pump) to another reactor (secondary esterifier). A catalyst-glycol solution was then added to the reaction mixture and the polycondensation, the elimination of glycol under reduced pressure started at 260-280°C. The dwell time of the reaction mixture (pre-condensate) was again controlled by a flow measuring device. The pre-condensate was then discharged consecutively in two downstream reactors whereas the dwell time was controlled via level of the reaction mixture in each reactor. In both reaction vessels further glycol was distilled out of the reaction mixture under increased temperature and reduced pressure until the desired polymerization degree is achieved. Dependent on the desired base resins different concentration of the oxidation catalyst Co-Stearate (CAS: 1002-88-6) (see Table 1 below) were added late as a melt to the reaction mixture shortly before the polymer melt flowed through the reactor discharge pump in a cooling bath with deionized water. After the polymer strand cooled, it was pelletized with a Pell-tec pelletizer.

The resulting polymer chips were crystallized for approx. 4 hours at 160°C, solid stated under vacuum at a temperature of 230°C for approx. 7 hours to the desired intrinsic viscosity value (~ IV-value: 0.860 dl/g) and then cooled to ambient temperature.

An overview of the synthesized resin compositions as well as the intrinsic viscosities of the solid stated resins is set forth in Table 1.

Table 1

| Resin | Catalyst added [ppm] | | Cobalt [ppm] | Intrinsic viscosity (IV, SSP) [dl/g] |
|---|---|---|---|---|
| | Ti[2] | Sb[3] | | |
| Sb-BaseR1[1] | - | 250 | - | 0.81 |
| Sb-BaseR2 | - | 250 | 75 | 0.934 |
| Ti-BaseR1 | 7 | - | - | 0.86 |
| Ti-BaseR2 | | | 45 | 0.742 |
| Ti-BaseR3 | | | 75 | 0.797 |
| [1] Commercial 1101 resin, received from Invista Resin&Fibers GmbH | | | | |
| [2] Sachtleben® Hombifast HS06 | | | | |
| [3] $Sb_2O_3$ | | | | |

Example 2 - General synthesis of the barrier resins

E2a - Synthesis of copolyester-ether - COPE (CP) barrier resins (BarrierR1-4)

Copolyester-ether was prepared using continuous polymerization process: A slurry of terephthalic acid and glycol in a small molar excess of glycol (PTA/EG molar ratio < 1:1.15) were continuously charged to the primary esterification reactor. The amount of slurry added to the primary esterification reactor was controlled by a flow measuring device. In the primary esterification reactor, terephthalic acid and glycol reacted at 250-260°C and 2-4 bar excess pressure under water elimination. The resulting low molecular weight esterification product was then transferred (via pump) to another reactor (secondary esterifier). A titanium catalyst (Sachtleben Hombifast HS06®, 12 ppm Ti based on the final polymer) and different amounts of poly(tetramethylene oxide) glycol (Terathane® Polyetherglycol, having a number average molecular weight of 1400 g/mole, stabilized with 200 ppm Ethanox® 330, CAS: 1709-70-2) based on the final polymer weight were then added to the reaction mixture. The amounts of Terathane® Polyetherglycol added are indicated in Table 2 below. The polycondensation, the elimination of glycol under reduced pressure started at 250-260°C. The dwell time of the reaction mixture (pre-condensate) was again controlled by a flow measuring device. The pre-condensate was then discharged consecutively in two downstream reactors where the dwell time was controlled via the level of the reaction mixture in each reactor. In both reaction vessels glycol was distilled out of the reaction mixture under increased temperature and reduced pressure until the desired polymerization degree was achieved. The desired polymer melt flowed through the reactor discharge pump into a cooling bath filled with deionized water. After the polymer strand cooled, it was pelletized with a Pell-tec pelletizer.

The compositions of the final copolyester-ethers as well as intrinsic viscosities of the resins are shown in Table 2 below.

Table 2

| Sample | Terathane® Polyetherglycol /PTA-EG[1] [wt. by wt.] | Intrinsic viscosity (IV) [dl/g] |
|---|---|---|
| BarrierR1 | 10/90 | 0.739 |
| BarrierR2 | 20/80 | 0.657 |
| BarrierR3 | 25/75 | 0.701 |
| BarrierR4 | 30/70 | 0.718 |
| [1] PTA/EG molar ratio < 1:1.15 | | |

E2b - Synthesis of stabilized copolyester-ether - COPE barrier resin (BarrierR5)

Synthesis of the Terathane® Polyetherglycol ($M_N$-1400 g/mol) / PTA-EG copolymer with a certain additive package via late addition: Terephthalic acid, ethylene glycol (molar ratio PTA/EG molar ratio < 1:1.15), 43 wt.-% of poly(tetramethylene oxide) glycol (Terathane® Polyetherglycol, having a number average molecular weight of 1400 g/mole, stabilized with 200 ppm Ethanox® 330) based on the final polymer weight and a catalyst solution (Sachtleben® Hombifast HS06, 17 ppm Titan based on the final polymer) were polymerized under continuous polymerization process conditions as described above (see Example E2a). 2500 ppm N,N'-bisformyl-N,N'-bis-(2,2,6,6-tetramethyl-4-piperidinyl)-hexamethylendiamine (Uvinul®4050, CAS: 124172-53-8), 2500 ppm 2-Hydroxy-4-n-octyloxybenzophenone (Hostavin® Aro8, CAS: 1843-05-6) and 200 ppm Tetrakis(2,4-di-tert- butylphenyl)-1,1-biphenyl-4,4'-diylbisphosphonite (Hostanox® PEP-Q, CAS: 38613-77-3) were added late as a melt to the reaction mixture shortly before the polymer melt flowed through the reactor discharge pump in a cooling bath with deionized water. After the polymer strand cooled, it was pelletized with a Pell-tec pelletizer. The intrinsic viscosity of the final stabilized copolyester-ether barrier resin R5 was 0.855 dl/g.

Example 3 - Preform and bottle properties

3a. Oxygen barrier properties barrier resin and base resins excluding an oxidation catalyst

In the following example, the oxygen barrier properties of base resins prepared by using titanium-based and antimony-based polycondensation catalysts were verified for comparative purposes.

Base resins without an oxidation catalyst as indicated in the Table 1 were blended with the commercial Oxyclear® 3500 barrier resin, received from Invista Resins&Fibers GmbH, and injection molded into preforms. The preforms were stretch blow molded into 500 mL, 28 g bottles. The oxygen permeation was measured. The compositions of the bottles as well as average oxygen ingress over 56 days are depicted in Table 3.

Table 3

| Sample | Ratio Barrier resin/Base resin [wt.-%] | Barrier resin composition | Base Resin composition | Oxygen ingress (ppb, 56 days) |
|---|---|---|---|---|
| 1 | 2.0/98.0 | commercial Oxyclear® 3500 barrier resin | Ti-BaseR1 | 742 |
| 2 | | | Sb-BaseR1 | 818 |

As is evident from the above Table 3, the base resins containing the antimony-based polycondensation catalyst exhibit no noticeable active oxygen scavenging activity (818 ppb after 56 days). The titanium-based polycondensation catalyst also provides very poor to negligible oxygen barrier properties (742 ppb after 56 days).

3b. Oxygen barrier properties barrier resins and base resins including an oxidation catalyst

Different dried and solid stated base resins as indicated in the Table 1 were blended with the stabilized barrier resin R5 (see Example E2b), described above, and injection molded into preforms. The preforms were stretch blow molded into 500 mL, 28 g bottles. The oxygen permeation was measured. The compositions of the bottles as well as average oxygen ingress over 56 days are depicted in Table 4.

Table 4

| Sample | Ratio | Barrier Resin composition | | Base Resin | Oxygen ingress (ppb, 56 days) | Wt.-% Ratio transition metal:Ti |
|---|---|---|---|---|---|---|
| | Barrier resin/ Base resin [wt.-%] | Name | Terathane® Polyetherglycol / PTA-EG [wt. by wt.] | Name (amount Co in resin) | | |
| 3 | 2.3/97.7 | Barrier R5 | 43/57 | Sb-BaseR2 (75 ppm Co) | 310 | 1:109 |
| 4 | | | | Ti-BaseR3 (75 ppm Co) | 51 | 1:10 |

(continued)

| Sample | Ratio | Barrier Resin composition | | Base Resin | Oxygen ingress (ppb, 56 days) | Wt.-% Ratio transition metal:Ti |
|---|---|---|---|---|---|---|
| | Barrier resin/ Base resin [wt.-%] | Name | Terathane® Polyetherglycol / PTA-EG [wt. by wt.] | Name (amount Co in resin) | | |
| 5 | 2.0/98 | Oxycle ar® 3500 barrier resin | 50/50 | Sb-BaseR2 (75 ppm Co) | 141 | 1:125 |
| 6 | | | | Ti-BaseR3 (75 ppm Co) | 32 | 1:10 |

As is evident from the above Table 4, the use of a titanium compound in combination with a transition metal based oxidation catalyst substantially reduces the oxygen ingress in the bottle (51 and 32 ppb after 56 days, respectively). In addition, the oxygen barrier is substantially improved in comparison to the antimony-based resins (51 vs. 310 ppb and 32 vs. 141 ppb, respectively). The improvement is substantially higher than would be expected in light of the very poor to negligible oxygen barrier properties provided by the titanium polycondensation catalyst on its own (see above Example 3a).

3c. Oxygen barrier properties barrier resins differing in their compositions

Ti-BaseR3 as indicated in the Table 1 was blended with different barrier resins as indicated in Table 2 and injection molded into preforms. The preforms were stretch blow molded into 500 mL, 28 g bottles, and the oxygen permeation was measured. The compositions of the bottles as well as average oxygen ingress over 56 days are depicted in Table 5.

Table 5

| Sample | Ratio Barrier resin/Base resin [wt.-%] | Barrier Resin composition | | Base Resin composition | | Oxygen ingress (ppb, 56 days) | Wt.-% Ratio transition metal:Ti |
|---|---|---|---|---|---|---|---|
| | | Name | Terathane® Polyetherglycol / PTA-EG [wt. by wt.] | Name | Co [ppm] | | |
| 7 | 10.0/90.0 | BarrierR1 | 10-90 | Ti-BaseR3 | 75 | 21 | 1:8 |
| 8 | 5.0/95.0 | BarrierR2 | 20-80 | | | 23 | 1:9 |
| 9 | 4.0/96.0 | BarrierR3 | 25-75 | | | 30 | 1:9 |
| 10 | 3.3/96.7 | BarrierR4 | 30-70 | | | 41 | 1:10 |

As is evident from the above Table 5, the variation of the Terathane® Polyetherglycol /PTA-EG ratio further improves the oxygen barrier properties in the presence of a titanium compound. There is a trend that changing the Terathane® Polyetherglycol /PTA-EG ratio from e.g. 50:50 to 10:90 improves oxygen barrier.

3d. Oxygen barrier properties barrier resin and base resins including an oxidation catalyst that differ in its concentration

Different dried and solid stated base resins as indicated in the Table 1 were blended with the barrier resin BarrierR5 (see Example E2b) and injection molded into preforms. The preforms were stretch blow molded into 500 mL, 28 g bottles. The oxygen permeation was measured. The compositions of the bottles as well as average oxygen ingress over 56 days are depicted in Table 6.

Table 6

| Sample | Ratio Barrier resin/ Base resin [wt.-%] | Barrier Resin composition | | Base Resin composition | | Oxygen ingress (ppb, 56 days) | Wt.-% Ratio transition metal:Ti |
|---|---|---|---|---|---|---|---|
| | | Name | Terathane® Polyetherglyc ol / PTA-EG [wt. by wt.] | Name | Co [ppm] | | |
| 11 | 2.3/97.7 | BarrierR5 | 43/57 | Ti-BaseR2 | 45 | 39 | 1:6 |
| 4 | | | | Ti-BaseR3 | 75 | 51 | 1:10 |

As is evident from the above Table 6, the presence of a titanium compound in the bottle resin composition allows reducing the amount of cobalt oxidation catalyst required for obtaining satisfying oxygen barrier properties.

Embodiments

Although the present invention is defined in the attached claims, it should be understood that the present invention can also (alternatively) be defined in accordance with the following embodiments:

1. A composition for preparing articles, preforms or containers comprising:

a) 80-99.5 parts by weight of a base polyester;
b) 0.5-20 parts by weight of a copolyester-ether, wherein the copolyester-ether comprises one or more polyester segments and one or more polyether segments;
c) a transition metal-based oxidation catalyst,

c1) wherein the transition metal is selected from cobalt, manganese, copper, chromium, zinc, iron, and nickel, and
c2) wherein the transition metal based oxidation catalyst is present in an amount of 10 - 500 ppm, on basis of the weight of the transition metal in the total composition; and

d) a titanium compound,

wherein the weight ratio of the transition metal-based oxidation catalyst to the titanium compound, on basis of the weight of the transition metal and the titanium, is from 50:1 to 1:1.

2. The composition of embodiment 1, wherein the polyether segment is a linear or branched poly ($C_2$-$C_6$-alkylene glycol) segment.

3. The composition of embodiment 1 or 2, wherein the polyether segment has a number-average molecular weight of from about 200 to about 5000 g/mol, preferably from about 600 to about 2500 g/mol.

4. The composition of any one of embodiments 1 to 3, wherein the amount of titanium in the total composition is less than the amount of the transition metal of the transition metal based oxidation catalyst in the total composition.

5. The composition of any one of embodiments 1 to 4, wherein the titanium compound is present in an amount of 5 to 20 ppm, on basis of the weight of titanium in the total composition, and wherein the transition metal based oxidation catalyst is present in an amount of 30 to 200 ppm, on basis of the weight of the transition metal in the total composition.

6. The composition of any one of embodiments 1 to 5, wherein the amount of titanium in the total composition is between 3 and 15 ppm.

7. The composition of any one of embodiments 1 to 6, wherein the titanium compound is a polycondensation and/or transesterfication catalyst.

8. The composition of any one of embodiments 1 to 7, wherein transition metal-based oxidation catalyst is a cobalt compound.

9. The composition of any one of embodiments 1 to 8, wherein the copolyester-ether comprises a polyethylene terephthalate (co)polyester segment.

10. The composition of any one of embodiments 1 to 9, wherein the polyester is a polyethylene terephthalate (co)polyester.

11. A kit-of-parts for use in preparing articles, preforms or containers comprising two masterbatches which may optionally be in admixture:

a first masterbatch comprising:

a) a base polyester,
b) a transition metal-based oxidation catalyst, wherein the transition metal is selected from cobalt, manganese, copper, chromium, zinc, iron, and nickel, and
c) a titanium compound, wherein the titanium compound is present in an amount of about 5 to about 500 ppm, on basis of the weight of the titanium in the first masterbatch; and

a second masterbatch comprising:

d) a copolyester-ether; and optionally
e) one or more antioxidants.

12. The kit-of-parts of embodiment 11, wherein the kit-of-parts is packaged for storage.

13. The kit-of-parts of embodiment 11 or 12, wherein the transition metal based oxidation catalyst is present in an amount of 500 - 15000 ppm, on basis of the weight of the transition metal in first masterbatch.

14. The kit-of-parts of any one of embodiments 11 to 13, wherein the second masterbatch comprises an antioxidant selected from group consisting of hindered phenols, benzophenones, sulfur-based antioxidants, phosphites and hindered amine light stabilizer.

15. The kit-of-parts of any one of embodiments 11 to 14, wherein the weight ratio of the transition metal-based oxidation catalyst to the titanium compound, on basis of the weight of the transition metal and the titanium, is from 5:1 to 500:1 in the first masterbatch.

16. The kit-of-parts of any one of embodiments 11 to 15, wherein transition metal-based oxidation catalyst is a cobalt compound in the first masterbatch.

17. The kit-of-parts of any one of embodiments 11 to 16, wherein the second masterbatch comprises a titanium compound.

18. An article, preform or container prepared from a composition or kit-of-parts of any one of embodiments 1 to 17.

19. A method of preparing a composition for use in preparing articles, preforms or containers comprising mixing:

a) 80-99.5 parts by weight of a base polyester;
b) 0.5-20 parts by weight of a copolyester-ether, wherein the copolyester-ether comprises one or more polyester segments and one or more polyether segments;
c) a transition metal-based oxidation catalyst,

c1) wherein the transition metal is selected from cobalt, manganese, copper, chromium, zinc, iron, and nickel, and
c2) wherein the transition metal based oxidation catalyst is present in an amount of 10 - 500 ppm, on basis of the weight of the transition metal in the total composition; and

d) a titanium compound;

wherein the weight ratio of the transition metal-based oxidation catalyst to the titanium compound, on basis of the weight of the transition metal and the titanium, is from 50:1 to 1:1.

20. A method of preparing a kit-of-parts for use in preparing articles, preforms or containers comprising combining two masterbatches,
the first masterbatch comprising:

a) a base polyester,
b) a transition metal-based oxidation catalyst, wherein the transition metal is selected from cobalt, manganese, copper, chromium, zinc, iron, and nickel, and
c) a titanium compound, wherein the titanium compound is present in an amount of about 5 to about 500 ppm, on basis of the weight of the titanium in the first masterbatch; and

the second masterbatch comprising:

d) a copolyester-ether; and optionally
e) one or more antioxidants.

**Claims**

1. A composition for preparing articles, preforms or containers comprising:

   a) 80-99.5 parts by weight of a base polyester;
   b) 0.5-20 parts by weight of a copolyester-ether, wherein the copolyester-ether comprises one or more polyester segments and one or more polyether segments;
   c) a transition metal-based oxidation catalyst,

      c1) wherein the transition metal is selected from cobalt, manganese, copper, chromium, zinc, iron, and nickel, and
      c2) wherein the transition metal based oxidation catalyst is present in an amount of 10 - 500 ppm, on basis of the weight of the transition metal in the total composition; and

   d) a titanium compound,

   wherein the weight ratio of the transition metal-based oxidation catalyst to the titanium compound, on basis of the weight of the transition metal and the titanium, is from 50:1 to 1:1.

2. The composition of claim 1, wherein the polyether segment is a linear or branched poly ($C_2$-$C_6$-alkylene glycol) segment.

3. The composition of claim 1 or 2, wherein the polyether segment has a number-average molecular weight of from about 200 to about 5000 g/mol, preferably from about 600 to about 2500 g/mol.

4. The composition of any one of claims 1 to 3, wherein the amount of titanium in the total composition is less than the amount of the transition metal of the transition metal based oxidation catalyst in the total composition.

5. The composition of any one of claims 1 to 4, wherein the titanium compound is present in an amount of 5 to 20 ppm, on basis of the weight of titanium in the total composition, and wherein the transition metal based oxidation catalyst is present in an amount of 30 to 200 ppm, on basis of the weight of the transition metal in the total composition.

6. The composition of any one of claims 1 to 5, wherein the amount of titanium in the total composition is between 3 and 15 ppm.

7. The composition of any one of claims 1 to 6, wherein the titanium compound is a polycondensation and/or transesterfication catalyst.

8. The composition of any one of claims 1 to 7, wherein transition metal-based oxidation catalyst is a cobalt compound.

9. The composition of any one of claims 1 to 8, wherein the copolyester-ether comprises a polyethylene terephthalate (co)polyester segment.

10. The composition of any one of claims 1 to 9, wherein the polyester is a polyethylene terephthalate (co)polyester.

11. A kit-of-parts for use in preparing articles, preforms or containers comprising two masterbatches which may optionally be in admixture:

   a first masterbatch comprising:

   a) a base polyester,
   b) a transition metal-based oxidation catalyst, wherein the transition metal is selected from cobalt, manganese, copper, chromium, zinc, iron, and nickel, and
   c) a titanium compound, wherein the titanium compound is present in an amount of about 5 to about 500 ppm, on basis of the weight of the titanium in the first masterbatch; and

   a second masterbatch comprising:

   d) a copolyester-ether; and optionally
   e) one or more antioxidants.

12. The kit-of-parts of claim 11, wherein the transition metal based oxidation catalyst is present in an amount of 500 - 15000 ppm, on basis of the weight of the transition metal in first masterbatch.

13. The kit-of-parts of any one of claims 11 to 12, wherein transition metal-based oxidation catalyst is a cobalt compound in the first masterbatch.

14. The kit-of-parts of any one of claims 11 to 13, wherein the second masterbatch comprises a titanium compound.

15. An article, preform or container prepared from a composition or kit-of-parts of any one of claims 1 to 14.

Europäisches
Patentamt

European
Patent Office

Office européen
des brevets

## EUROPEAN SEARCH REPORT

**Application Number**

EP 13 19 9125

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2009/032560 A1 (INVISTA TECHNOLOGIES S AR L [CH]; CHEN YAN [US]; SUN QUN [US]; DRBOHLA) 12 March 2009 (2009-03-12)<br>* page 12, line 5 - page 15, line 10; claims 1, 3, 5, 11, 13, 15-19; examples 1-9, B, D, E; tables 1-3 * | 1-11,14, 15 | INV.<br>C08L67/02 |
| X,D | WO 2010/096459 A2 (INVISTA TECHNOLOGIES S AR L [CH]; DRBOHLAV JOSEPH III [US]; YUAN ZHONG) 26 August 2010 (2010-08-26)<br>* page 11, line 5 - page 13, line 15; examples 1, 3, 7; table 1 * | 1-15 | |
| A | WO 2012/126951 A1 (PLASTIC RELIFE SRL [IT]; SEVERINI TONINO [IT])<br>27 September 2012 (2012-09-27)<br>* page 19, line 21 - page 21, line 1; examples 10-12; table 4 * | 1-15 | |
| A | WO 01/10947 A1 (EASTMAN CHEM CO [US])<br>15 February 2001 (2001-02-15)<br>* page 27, line 13 - page 29, line 11; examples 25, 31; table 11 * | 1-15 | |

TECHNICAL FIELDS
SEARCHED      (IPC)

C08L
B32B
C08K

The present search report has been drawn up for all claims

| Place of search | Date of completion of the search | Examiner |
|---|---|---|
| The Hague | 30 May 2014 | Enescu, Cristina |

EPO FORM 1503 03.82 (P04C01)

## ANNEX TO THE EUROPEAN SEARCH REPORT
## ON EUROPEAN PATENT APPLICATION NO.

EP 13 19 9125

This annex lists the patent family members relating to the patent documents cited in the above-mentioned European search report.
The members are as contained in the European Patent Office EDP file on
The European Patent Office is in no way liable for these particulars which are merely given for the purpose of information.

30-05-2014

| Patent document cited in search report | | Publication date | Patent family member(s) | | Publication date |
|---|---|---|---|---|---|
| WO 2009032560 | A1 | 12-03-2009 | AR | 068139 A1 | 04-11-2009 |
| | | | AT | 548423 T | 15-03-2012 |
| | | | EP | 2183318 A1 | 12-05-2010 |
| | | | US | 2011008554 A1 | 13-01-2011 |
| | | | WO | 2009032560 A1 | 12-03-2009 |
| WO 2010096459 | A2 | 26-08-2010 | CN | 102575088 A | 11-07-2012 |
| | | | EP | 2398857 A2 | 28-12-2011 |
| | | | JP | 2012518709 A | 16-08-2012 |
| | | | KR | 20110124775 A | 17-11-2011 |
| | | | RU | 2011138421 A | 27-03-2013 |
| | | | US | 2012114887 A1 | 10-05-2012 |
| | | | WO | 2010096459 A2 | 26-08-2010 |
| WO 2012126951 | A1 | 27-09-2012 | EP | 2688745 A1 | 29-01-2014 |
| | | | US | 2014008368 A1 | 09-01-2014 |
| | | | WO | 2012126951 A1 | 27-09-2012 |
| WO 0110947 | A1 | 15-02-2001 | AU | 776210 B2 | 02-09-2004 |
| | | | AU | 6530400 A | 05-03-2001 |
| | | | BR | 0013129 A | 23-04-2002 |
| | | | EP | 1212372 A1 | 12-06-2002 |
| | | | MX | PA02001408 A | 30-07-2002 |
| | | | US | 6455620 B1 | 24-09-2002 |
| | | | WO | 0110947 A1 | 15-02-2001 |

EPO FORM P0459

For more details about this annex : see Official Journal of the European Patent Office, No. 12/82

**EP 2 886 601 A1**

**Patent documents cited in the description**

- WO 2010096459 A2
- WO 2011031929 A2